# EUROPEAN PATENT SPECIFICATION

(11) **EP 0 786 054 B1**
(45) Date of publication and mention of the grant of the patent: **02.01.2002**
(21) Application number: 96910976.8
(22) Date of filing: 18.04.1996
(51) Int. Cl.: F16C 13/00, D21G 1/02

(54) **SYSTEM OF OIL FEED DUCTS FOR A VARIABLE-CROWN ROLL**
ÖLZUFUHRLEITUNGENVORRICHTUNG FÜR EINE DURCHBIEGUNGSEINSTELLWALZE
SYSTEME DE CONDUITES D'ALIMENTATION EN HUILE POUR CYLINDRE A BOMBAGE VARIABLE

(30) Priority: 18.05.1995 FI 952419
(43) Date of publication of application: 30.07.1997
(73) Proprietor: Metso Paper, Inc., 00130 Helsinki (FI)
(72) Inventor: HAIKO, Risto, FIN-40530 Jyväskylä (FI); KIVIOJA, Pekka, FIN-40950 Muurame (FI); LEHTO, Ari, FIN-41310 Leppävesi (FI)
(74) Representative: Kinne, Reinhard, Dipl.-Ing.
(86) International application number: FI9600207
(87) International publication number: WO9636817

(56) References cited:
- WO-A-91/02173
- DE-C- 3 533 210
- US-A- 4 106 405
- US-A- 4 292 716

## Description

The invention concerns a variable-crown roll according to the pre-characterizing clause of claim 1.

From the prior art, a number of different variable-crown rolls for paper machines or paper finishing machines are known, for which rolls different designations are used, such as variable-crown roll, roll adjustable in zones, and equivalent. As a rule, these rolls comprise a massive or tubular, stationary roll axle and a roll mantle that is arranged revolving around the axle. Between said axle and said mantle, glide-shoe arrangements that act upon the inner face of the mantle and/or a chamber or series of chambers for pressure fluid are fitted, so that the axial profile of the mantle at the nip can be aligned or adjusted in the desired way.

In variable-crown rolls, a complex oil distribution system is needed, because the roll has a number of points to which oil must be passed. These points include the zones in a variable-crown roll, to which pressure fluid must be passed, various points that require lubrication, to which a lubricant is passed, possible roll heating means for the supply of heating fluid, and equivalent objects that consume oil. Since a roll has a number of various oil-consuming objects, the roll must, of course, also include a system of ducts for the exhaust oil. In the prior art, the system of oil distribution ducts has been accomplished in a variable-crown roll in a number of different alternative ways.

A prior-art solution is described, e.g., in the US Patent No. **4,222,324,** in which an axial bore of its own has been formed into the roll axle of the variable-crown roll for each zone in the variable-crown roll, through which bores the oil has been passed into the zones through radial bores. Thus, in such a roll, it has been necessary to make a considerable amount of bores and various pipe systems. This results in the drawback that the cost of manufacture of the system of oil distribution ducts is quite high, and the system of ducts requires very careful manufacture, for various rubbish, dirt, machining chips and equivalent readily remain in said ducts. Moreover, for possible heating and lubrication of the roll, it has been necessary to form the required bores into the roll axle, or it has been necessary to provide the roll with a specific separate system of ducts for these functions.

A second prior-art solution is described, e.g., in the US Patent No. **4,292,716,** in whose construction an axial bore of large diameter has been formed into the roll axle, in which bore a series of pipes has been fitted, which comprises a number of pipes, through which the pressure fluid is passed to the hydrostatic loading elements placed in the zones of the roll. The series of pipes is connected with a number of sealing elements, by whose means the series of pipes is sealed in relation to the axial bore of the roll between the zones. It is one of the remarkable drawbacks of this arrangement that the series of pipes comprises a number of sealing points and, thus, it comprises a number of seals. Moreover, the pipes included in the series of pipes must be of very high quality to withstand the pressures required by the zones. A further problem in this construction is involved in the seal friction. It also results from these drawbacks that, for example, the construction in accordance with said US patent is very expensive and complicated to manufacture. Also, in such a solution, separate systems of ducts are required, for example, for possible heating of the roll and for the points to be lubricated. In this construction, if the zones in the roll were to be made more frequent, said problems would be emphasized further, as the number of objects to be sealed would increase accordingly. A variable-crown roll comprising the features of the pre-characterizing clause of claim 1 is described in the *US Patent No. 4,106,405*. In the solution of said patent, a central hole of large diameter has been formed into the roll axle, in which hole coaxially arranged oil feed pipes have been fitted, through which the pressure fluid is fed into the zones of the roll. This solution also involves a number of different drawbacks, of which it should be mentioned, for example, that the wall thicknesses of the pipes must be large, because the pressures required by adjacent zones may differ from one another quite substantially. Thus, the risk of buckling of the pipes is quite high. Also, the sealing of the pipes is quite problematic in this solution, for the pipes must be sealed in relation to one another, on one hand, and they must be sealed in relation to the central hole formed into the roll axle, on the other hand. Thus, from the point of view of the manufacture, the system of oil feed ducts of this known roll is complicated and expensive. Also in this system, for possible heating of the roll, the roll must be provided with a separate fluid distribution system.

A further prior-art solution is described in the *US Patent No. 5,103,542*. In the solution of this patent, the system of oil distribution ducts in the roll is composed of one profile, which is fitted in an axial hole that has been formed into the roll axle. It is an advantage of this profile solution that, if necessary, the profile may include the ducts for the pressure fluid passing into the zones, lubricant ducts, an exhaust oil duct, and, if necessary, a system of ducts for heating fluid. Indeed, such a solution is quite advantageous when the distribution of zones in the roll is not so dense, i.e. when the number of zones in the roll is not high. In a case in which the number of zones must be increased, this solution involves the drawbacks that are related to the fact that the number of points to be sealed becomes higher. Thus, when said profile solution is employed, the number of ducts is quite limited. Owing to the large number of seals and the little plays, the installation of the profile into the roll axle is quite difficult, especially when the number of zones is high. In order that an adequate sealing quality of the seals of the profile could be secured, it has been necessary to hone the central hole in the axle.

The object of the present invention is to provide an improved variable-crown roll having a system of oil feed ducts, by means of which system of ducts many of the drawbacks described above and related to the prior art are avoided.

According to the invention, this object is achieved by the variable-crown roll according to claim 1.

It is the most significant advantage of the present invention over the prior-art solutions that the invention makes it possible that, if necessary, oil of the desired pressure can be fed into each of the loading elements in the roll. At present, when it is desirable to achieve more and more precise profiling by means of a variable-crown roll, the aim is that it should be possible to feed the desired adjustable pressure into each loading element in the roll. By means of the prior-art solutions described above, this has not been possible, at least not by simple means. The present invention also involves a number of other advantages, of which the following should be mentioned. The system of oil feed ducts has a very high resistance to pressure (of an order higher than 100 bars) with a low wall thickness. In the system of oil feed ducts circular large ducts can be employed, which results in low flow losses. The number of ducts can be made high readily. Owing to the construction, the sealing can be carried out by means of ordinary O-rings, in which case the use of more expensive piston seals is avoided. Owing to the above, the installation of the system of oil feed ducts is easy, the solution does not involve high seal friction, and the manufacture of the roll axle is quicker, because the central axial hole does not have to be honed and the radial bores passing into the central axial hole need not be rounded. Further, for the central axial hole in the roll axle, larger dimensional deviations are permitted than in the prior art. The further advantages and characteristic features of the invention will come out from the following detailed description of the invention.

In the following, the invention will be described by way of example with reference to the figures in the accompanying drawing.

Figure 1 is a fully schematic longitudinal sectional view of a variable-crown roll in accordance with the invention that is provided with an oil distribution system

Figure 2 is an illustration on a larger scale of a first embodiment of the system of oil feed ducts.

Figure 2A is a schematic illustration of an intermediate flange of the system of oil feed ducts viewed at the line A-A in Fig. 2.

Figure 2B shows an end flange viewed at the line B-B in Fig. 2.

Figures 3A and 3B are illustrations corresponding to Fig. 2 of alternative embodiments of the system of oil feed ducts.

Figure 3C is an illustration corresponding to Fig. 2A of the intermediate flange in a system of oil supply ducts as shown in Figs. 3A and 3B.

Figure 4 shows a further embodiment of the invention.

Figure 5A is an illustration corresponding to Fig. 2 of a further embodiment of the invention.

Figure 5B is an illustration corresponding to Fig. 2A of the intermediate flange of the system of oil feed ducts as shown in Fig. 5A.

Figure 6A is a further embodiment of the system of oil feed ducts, while the illustration corresponds to Fig. 5A.

Figure 6B is an illustration corresponding to Fig. 5B of the intermediate flange of the system of oil feed ducts shown in Fig. 6A.

Figures 7 and 8 are further embodiments of the system of oil feed ducts as an illustration corresponding to Fig. 2.

Figures 9A and 9B illustrate a further usable embodiment of the system of oil feed ducts and of the intermediate flange as illustrations, for example, corresponding to Figs. 6A and 6B.

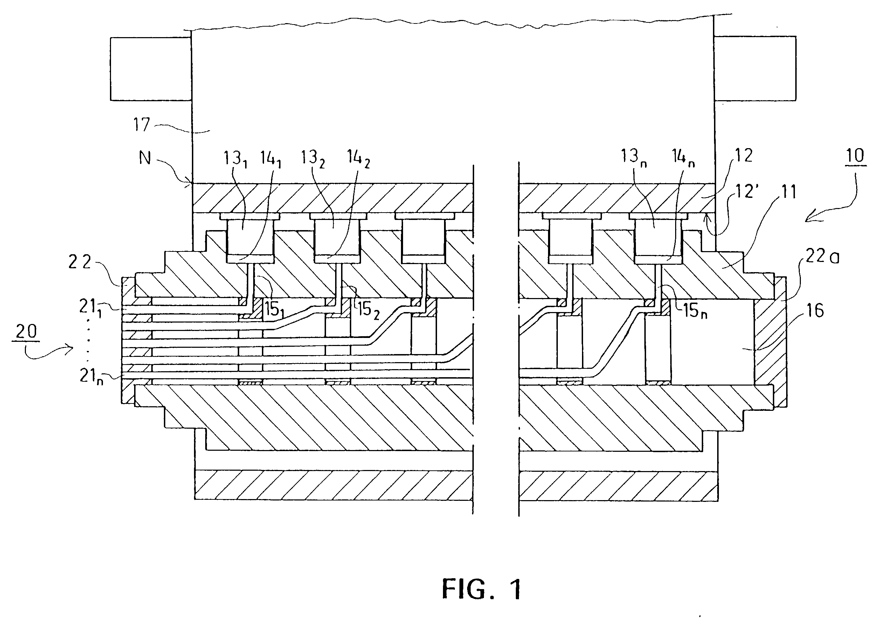

In Fig. 1. the variable-crown roll is denoted generally with the reference numeral 10. The roll 10 comprises a roll axle 11 and a roll mantle 12 which has been arranged revolving on said axle. In the illustration of Fig. 1, the roll 10 is a so-called nip roll, which forms a nip N with a back-up roll 17. Between the roll axle 11 and the roll mantle 12, loading elements 13₁...13ₙ have been fitted, which act upon the inner face 12' of the roll mantle and by whose means the roll mantle 12 is loaded in the nip plane so as to regulate the axial profile of the roll mantle in the desired way. In the illustration in Fig. 1, the loading elements 13₁...13ₙ have been fitted as radially mobile in the radial cylinder bores 14₁...14ₙ that have been formed into the roll axle 11. Further, the roll 10 as shown in Fig. 1 is a so-called variable-crown roll adjustable in zones, in which roll each of the loading elements 13₁...13ₙ in the roll 10 forms a zone of its own so that each loading element can be regulated individually.

Into the roll axle 11, a through hole 16 has been formed, which extends substantially axially from one end to the other end of the roll. Into said axial hole 16, so-called central hole, a system of oil feed ducts has been installed, which system is denoted generally with the reference numeral 20 in Fig. 1. Generally speaking, the system 20 of oil feed ducts comprises oil feed pipes 21₁...21ₙ passing through the end flange 22 to each loading element 13₁...13ₙ, each of said oil feed pipes being connected to radial bores 15₁...15ₙ passing to each loading element 13₁...13ₙ. An end flange at one end of the roll axle 11 is shown fully schematically, and it is denoted with the reference denotation 22a. If the number of the loading elements 13₁...13ₙ in the variable-crown roll 10 is so high that the pipes 21₁...21ₙ passing to all of the loading elements cannot be fitted in the central hole 16 from the same end of the roll 10, the feed of oil to the loading elements 13₁...13ₙ can be "divided into two parts" so that, to the loading elements placed at different sides of the centre line of the roll 10, the oil is fed from different ends of the roll accordingly. Then, of course, at each end of the roll 10 axle 11, an end flange 22 similar to that shown in Fig. 1 to be at the left end of the roll is used, in which case the oil feed and the feed pipes 21₁...21ₙ, respectively, are passed into the roll through both of the ends.

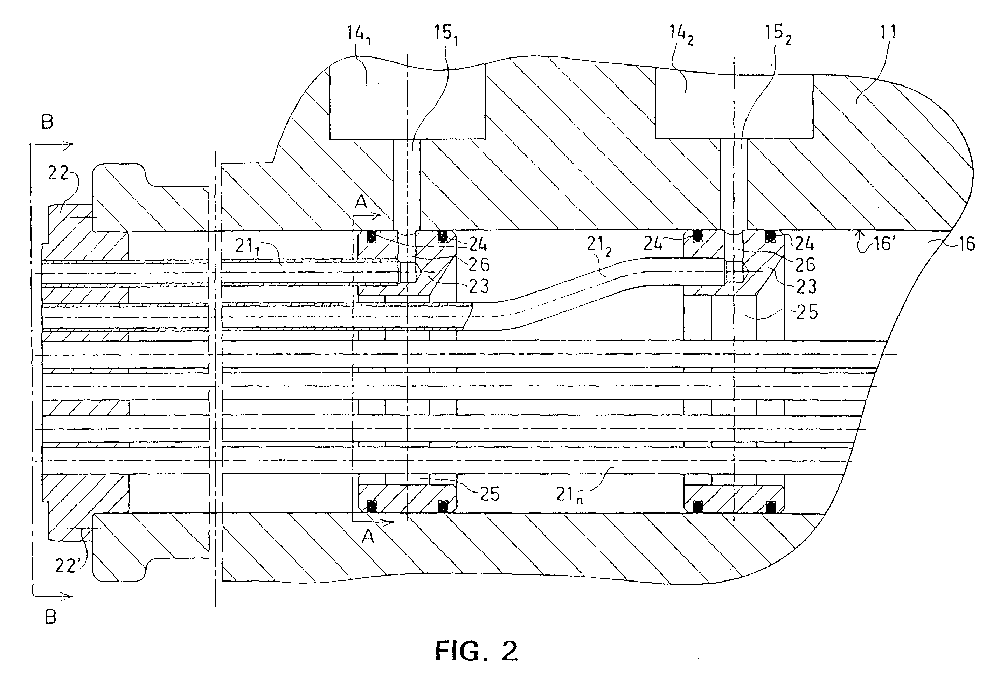

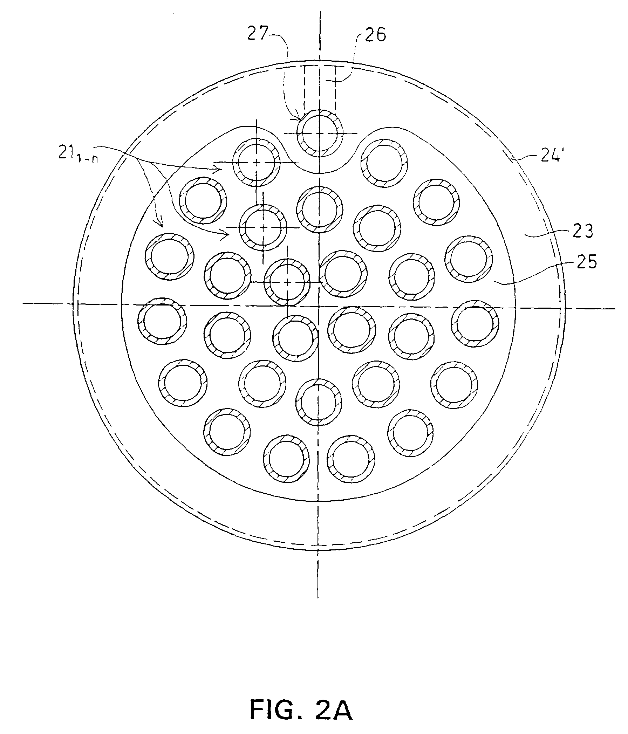

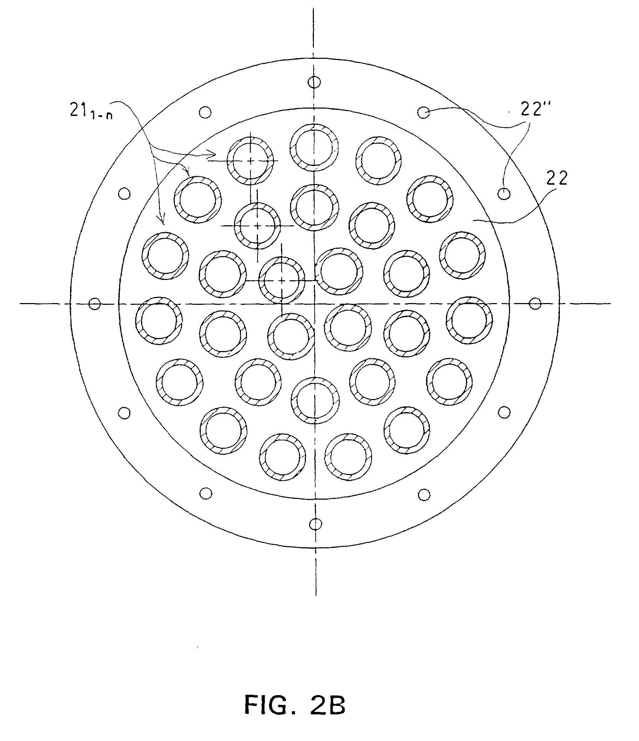

Fig. 2 shows a first embodiment of the system of oil feed ducts Like in Fig. 1, so also in Fig. 2 the roll axle is denoted with the reference numeral 11, the axial through central hole with the reference numeral 16, the radial cylinder bores of the loading elements with the reference numerals 14₁ and 14₂, the radial bores extending from the cylinder bores into the central hole 16 with the reference numerals 15₁ and 15₂, the oil feed pipes with the reference numerals 21₁...21ₙ, and the end flange through which the oil feed pipes are passed into the roll with the reference numeral 22. Further, Fig. 2 schematically shows the fastening means, such as fastening screws 22', by whose means the end flange 22 is attached to the end of the roll axle 11. Regarding the end flange 22, reference is made further to Fig. 2B, in which the end flange 22 is shown as an illustration taken along the line B-B in Fig. 2. In Fig. 2B, the denotation 22" refers to the holes passing through the end flange 22 for the fastening screws 22'.

As is shown in Fig. 2, at the location of each radial cylinder bore 14₁,14₂ that has been formed into the roll axle 11, into the central hole 16 in the axle, a distributor piece of the system of oil feed ducts, i.e. an intermediate flange, 23 has been installed, through which flange 23 the pressure fluid is passed to each loading element. Regarding the intermediate flange 23, reference is made additionally to Fig. 2A, which shows said intermediate flange as an illustration taken along the line A-A in Fig. 2. Into the intermediate flange 23, a radial bore 26 has been formed, whose bottom is closed and which is opened into the radial bore 15₁,15₂ passing into the cylinder bore 14₁,14₂ that has been formed into the roll axle 11. Further, into the distributor piece or intermediate flange 23, an axial bore 27 has been formed, whose bottom is closed and which is connected with said radial bore 26. To said axial bore 27, in each particular case, the feed pipe 21₁,21₂ of the system of oil feed ducts is connected through which the pressure fluid is supposed to be fed into the loading element at which the intermediate flange 23 concerned is placed. In the embodiment of Fig. 2, the joint between the feed pipes 21₁,21₂ and the intermediate flange 23, i.e. the distributor piece, is fixed.

As is seen clearly from Figs. 2 and 2A, the intermediate flange 23 is substantially annular, so that in said intermediate flange there is a large through hole 25, through which the pressure fluid feed pipes passing to the other loading elements are passed. As was already stated earlier, in the embodiment of Fig. 2, the joint between the oil feed pipes 21₁...21ₙ and the corresponding intermediate flange 23 is fixed, so that said joint is also tight and does not require additional sealing. In the other respects, in the embodiment of Fig. 2, the sealing has been arranged so that into the outer face of each intermediate flange 23, at both sides of the radial bore 26, annular grooves 24' have been formed, into which O-ring seals 24 have been fitted, which seal the intermediate flange 23 against the inner face 16' of the central hole 16 that has been formed into the roll axle 11. Thus, at each loading element and each cylinder bore 14₁,14₂, respectively, the sealing has been arranged by means of two O-rings 24, and the feed of oil does not require any other seals. Thus, the intermediate flanges 23 are not fixed rigidly to the central hole 16, but they are allowed to "live" slightly, for example, because of thermal expansion. This is, however, no substantial drawback, for partly the thermal expansion is absorbed and taken into account by bends of the oil feed pipes 21₁...21ₙ, because the oil feed pipes that pass to intermediate flanges 23 placed more distant from the end flange 22, at which pipes the effect of thermal expansion is largest, are provided with a greater extent of bending, so that these bends absorb thermal expansion. The oil feed pipes passing to intermediate flanges 23 placed close to the end flange 22 are shorter, in which case the thermal expansion is no major drawback.

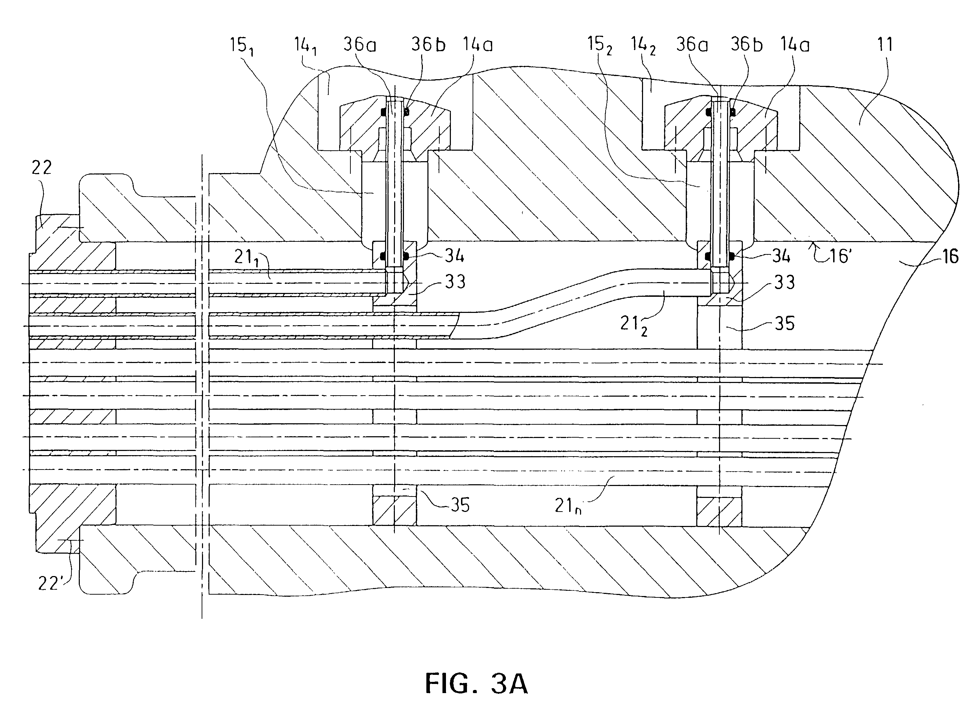

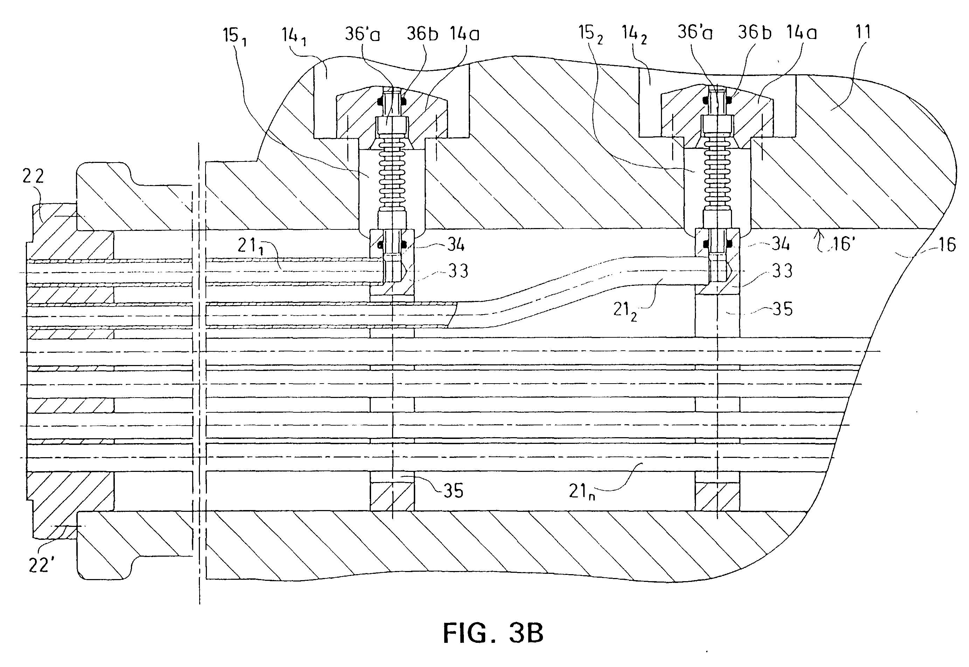

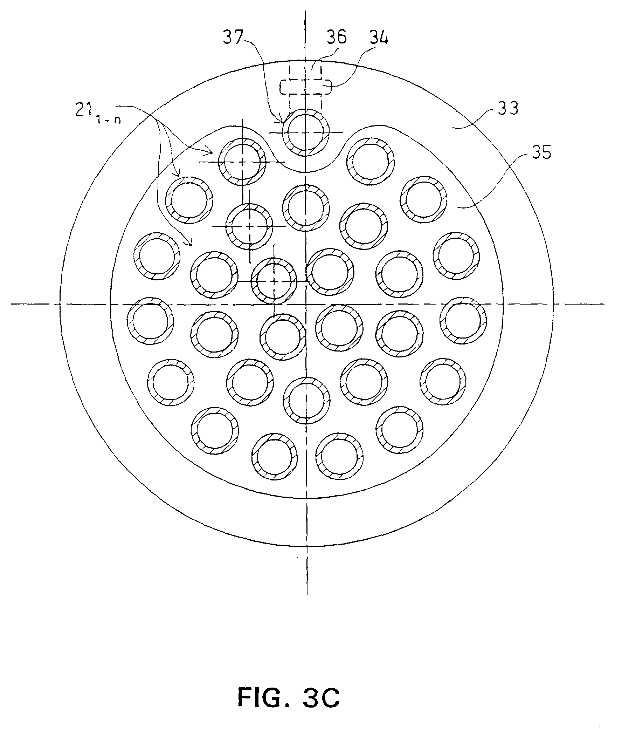

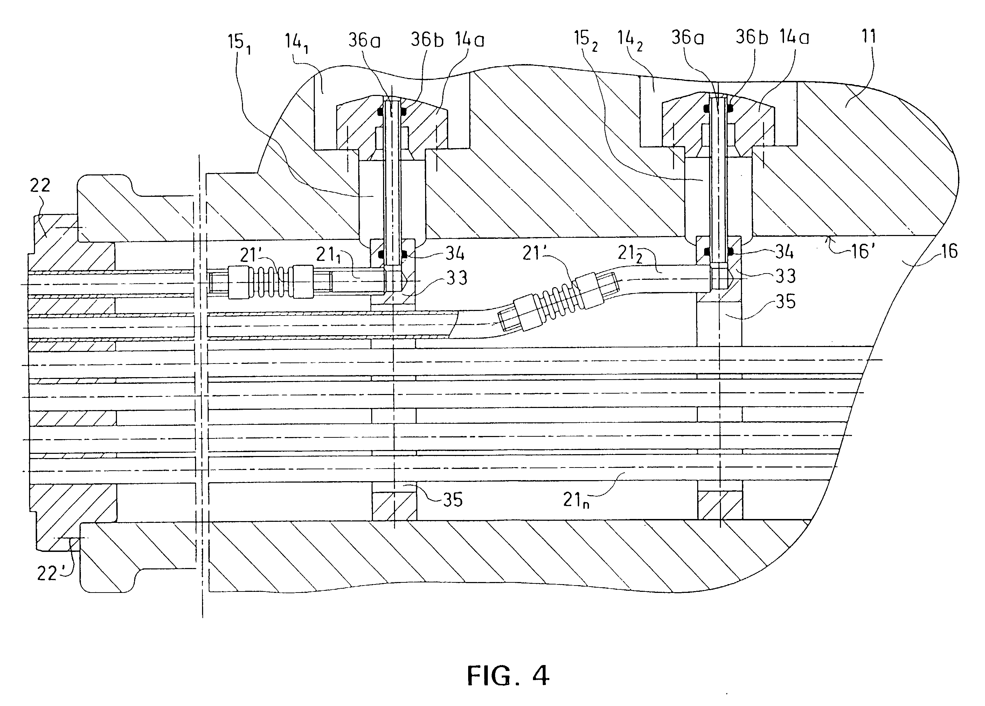

Figs. 3A, 3B and 4 illustrate some alternative embodiments of the modes in which the feed of oil can be accomplished and how thermal expansion can be taken into account in the system of oil feed ducts. Fig. 3C shows an intermediate flange that is used in connection with the embodiments of Figs. 3A, 3B and 4. These embodiments will be described in the following in the respects in which they differ from the earlier description, so that, in a corresponding way, regarding similarities, reference is made to the description given above. The oil feed pipes 21₁...21ₙ are passed into the roll through the end flange 22 similarly to that described above, so that each feed pipe in its turn communicates with the respective loading element by the intermediate of the distributor piece, i.e. intermediate flange, which is denoted with the reference numeral 33 in Figs. 3A...3C and 4. As was stated above, in the embodiments that are being discussed now, the intermediate flange 33 is similar, and so it is annular, as comes out clearly from Fig. 3C, and comprises a large through opening 35. Into the intermediate flange 33, still in a way similar to that described in the embodiment of Fig. 2. an axial bore 37 has been formed so that, in each particular case, one of the feed pipes 21₁...21ₙ can be connected to the intermediate flange 33 operating as the distributor piece and placed at the location of the loading element. In the exemplifying embodiments now concerned, the joint between the feed pipe concerned and the intermediate flange 33 is fixed, as is also the case in the embodiment of Fig. 2. Further, into the intermediate flange 33, a radial bore 36 has been formed in a way corresponding to Fig. 2, which bore 36 communicates with the axial bore 37.

In the embodiments of Figs. 3A, 3B and 4, into the bottoms of the cylinder bores 14₁,14₂, a large radial bore 15₁,15₂ has been formed, which communicates with the central hole 16 in the axle 11 in each particular case, and further, in the exemplifying embodiments now discussed, on the bottoms of the cylinder bores 14₁,14₂, a support piece 14a has been installed which covers the radial bore 15₁,15₂, and in the exemplifying embodiment of Fig. 3A, into this support piece 14a, an intermediate pipe 36a has been fixed as sealed, the opposite end of said pipe 36a being installed in the radial bore 36 in the intermediate flange 33 as sealed, said sealing being carried out by means of an O-ring seal 34. Against the support piece 14a, the intermediate pipe 36a is also sealed by means of an O-ring seal 36b. In the embodiment of Fig. 3A, the intermediate pipe 36a, which operates as a duct between the cylinder bore 14₁,14₂ and the flange 33, is a rigid duct. Such a solution can be used in particular in cases in which no extensive thermal expansion is expected. Minor thermal expansion can also be received by the solution shown in Fig. 3A, for the exemplifying embodiment of Fig. 3A permits slight axial movements of the intermediate flanges 33 in the central hole 16 in the roll axle 11. As can be seen from Fig. 3A, in this exemplifying embodiment, the intermediate flanges 33 do not require sealing against the inner face 16' of the central hole.

The embodiment shown in Fig. 3B differs from the solution described in Fig. 3A in the respect that, in the case of Fig. 3B, a resilient duct is used as the intermediate pipe 36'a which, in each particular case, connects the intermediate flange 33 with the cylinder bore 14₁,14₂, as is shown in Fig. 3B. Thus, the embodiment of Fig. 3B permits quite considerable axial movements of the intermediate flanges 33 resulting from thermal expansion. If the movement of the intermediate flanges 33 resulting from thermal expansion is remarkably large, of course the radial bores 15₁,15₂ must be sufficiently large in order that this movement could be possible. The exemplifying embodiment of Fig. 3B can be used expressly in cases in which large movements arising from thermal expansion are expected.

In respect of the connection between the intermediate flanges 33 and the cylinder bores 14₁,14₂, the embodiment of Fig. 4 is similar to that described in relation to Fig. 3A. Thus, in the embodiment of Fig. 4, similarly a rigid intermediate pipe 36a is used, which is sealed by means of the seals 34,36b against the support piece 14a, on one hand, and against the intermediate flange 33, on the other hand. In the embodiment of Fig. 4, a resilience that takes into account, for example, thermal expansion has been arranged in the substantially horizontal feed pipes 21₁...21ₙ so that, in each feed pipe 21₁...21ₙ, a resilient intermediate piece 21' has been installed. Thus, in the exemplifying embodiment of Fig. 4, possible thermal expansion does not shift the intermediate flanges 33 from their positions shown in the figure, but the increased and reduced lengths of the feed pipes 21₁...21ₙ arising from thermal expansion are received by means of said resilient intermediate pieces 21'. Thus, the exemplifying embodiment of Fig. 4 is also well suitable for use in cases in which high variations of temperature are to be expected.

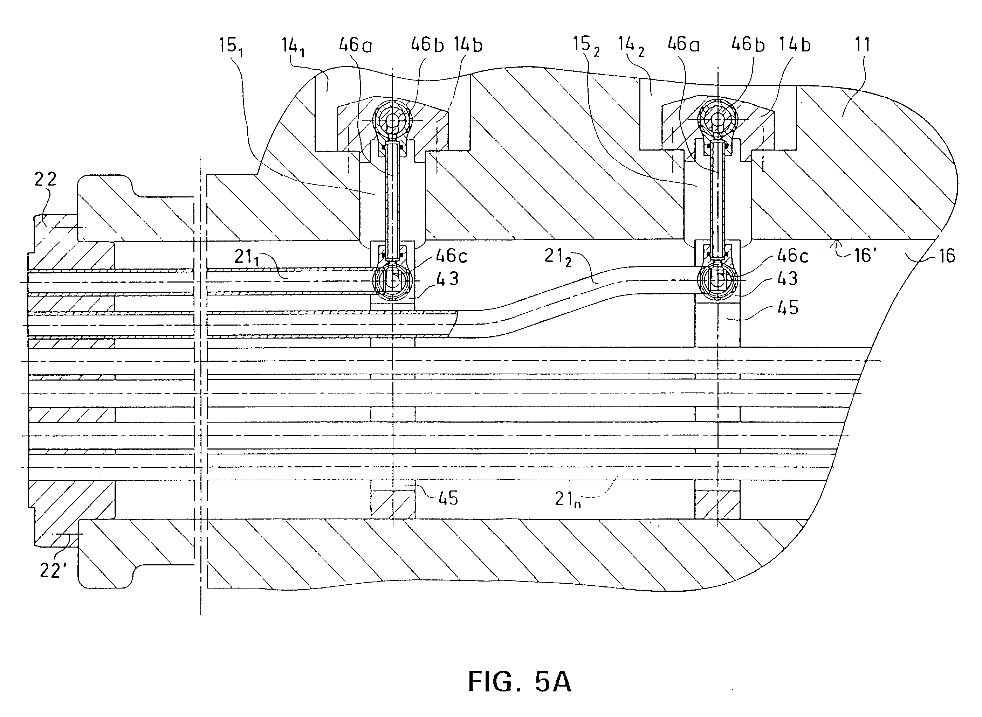

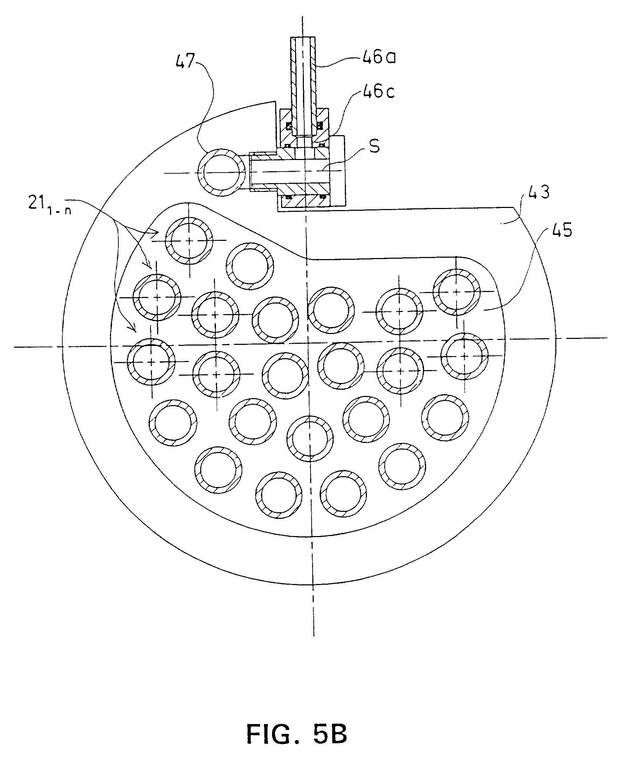

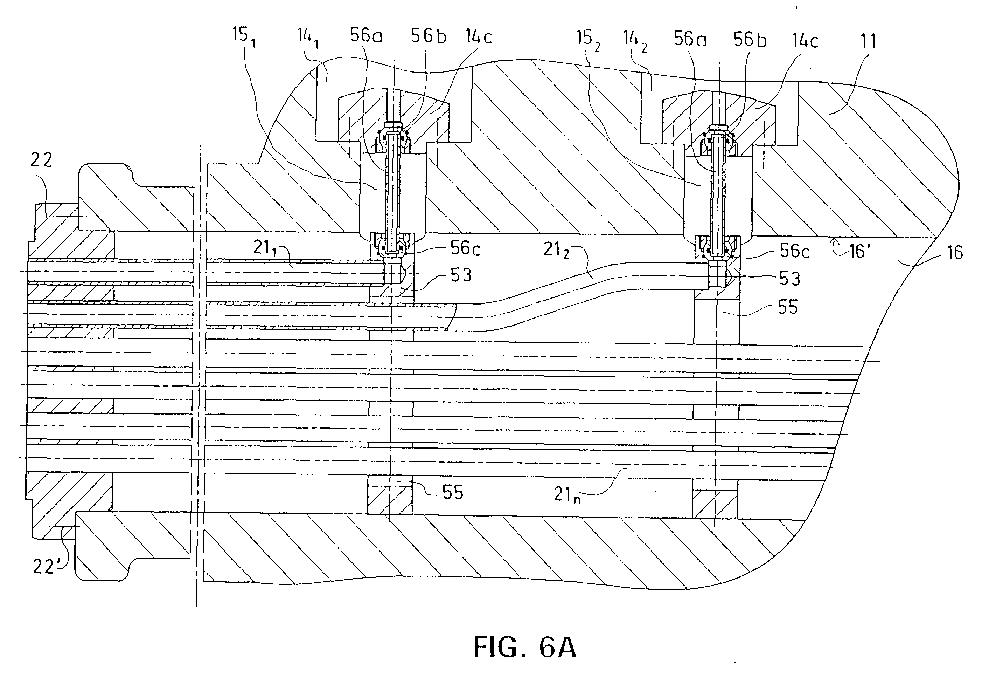

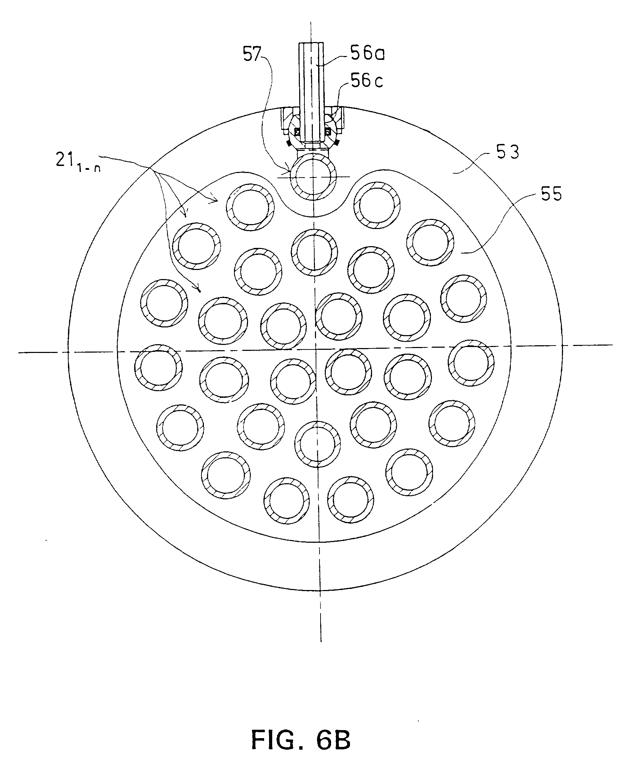

The embodiments of Figs. 5A, 5B and 6A, 6B are meant in particular for cases in which, for example owing to thermal expansion, substantial changes can be expected in the lengths of the feed pipes 21₁...21ₙ, in which case the intermediate flange, which is placed at the location of each cylinder bore 14₁,14₂ and which operates as a distributor piece, must be able to move in the axial direction. In Figs. 5A and 5B, the intermediate flange is denoted with the reference numeral 43, and in Figs. 6A and 6B the intermediate flange is denoted with the reference numeral 53, respectively. The intermediate flanges 43,53 themselves are provided with axial bores 47,57, to which one of the feed pipes 21₁...21ₙ can be connected in each particular case. In the exemplifying embodiments now concerned, the joint between the feed pipe and the intermediate flange is rigid and tight. The intermediate flanges are still substantially annular and comprise a large opening 45,55, through which the other feed pipes can pass.

In the exemplifying embodiments of Figs. 5A and 6A, into the bottoms of the cylinder bores 14₁,14₂, large-diameter radial bores 15₁,15₂ have been formed, which connect the cylinder bores 14₁,14₂ with the central hole 16 formed into the roll axle 11. On the radial bore 15₁,15₂, on the bottom of the cylinder bore 14₁,14₂, in each exemplifying embodiment, a support piece 14b,14c has been installed. Between the support piece 14b,14c and the intermediate flange 43,53, to connect them, an intermediate pipe 46a,56a has been installed, through which pipe the pressure fluid is passed into the cylinder bores 14₁,14₂. The intermediate pipe 46a,56a is a rigid duct both in the embodiment of Fig. 5A and in the embodiment of Fig. 6A. As was already stated earlier, the embodiments of Figs. 5A and 6A are meant in particular for cases in which large changes in the lengths of the feed pipes 21₁...21ₙ can be expected because of temperature. In the exemplifying embodiments of Figs. 5A and 6A, these changes in length are taken into account so that, in each case, the joints between the intermediate pipe 46a,56a and the intermediate flange 43,53, on one hand, and the support piece 14b,14c, on the other hand, are articulated.

In the case of Figs. 5A and 5B, the intermediate pipe 46a is connected with the intermediate flange by means of an articulated pipe joint 46c, which permits pivoting of the intermediate pipe 46a in relation to the intermediate flange 43 around the axis S, which is substantially perpendicular to the roll axle and, on the other hand, to the intermediate pipe 46a. A similar articulated pipe joint 46b is also arranged in the support piece 14b, so that the pivot axis of said articulated pipe joint 46b is parallel to the pivot axis of the articulated pipe joint 46c. Thus, when temperatures cause changes in length in the feed pipes 21₁...21ₙ, the intermediate flanges 43 can move freely in the axial direction in the central hole 16 in the roll axle 11, because said articulated pipe joints 46b,46c permit axial movement of the intermediate flanges 43.

The embodiment of Figs. 6A and 6B is quite extensively similar to the embodiment shown in Figs. 5A,5B, so that, also in this embodiment, both the intermediate flange 53 and the support piece 14c are provided with articulated pipe joints 56b,56c, to which the intermediate pipe 56a is connected. However, compared with the exemplifying embodiment shown in Figs. 5A and 5B, it is a difference that, in the embodiment of Figs. 6A and 6B, the articulated pipe joints consist of spherical joints 56b,56c. Spherical joints permit freer movements, but one of their drawbacks is, however, the high cost of the construction.

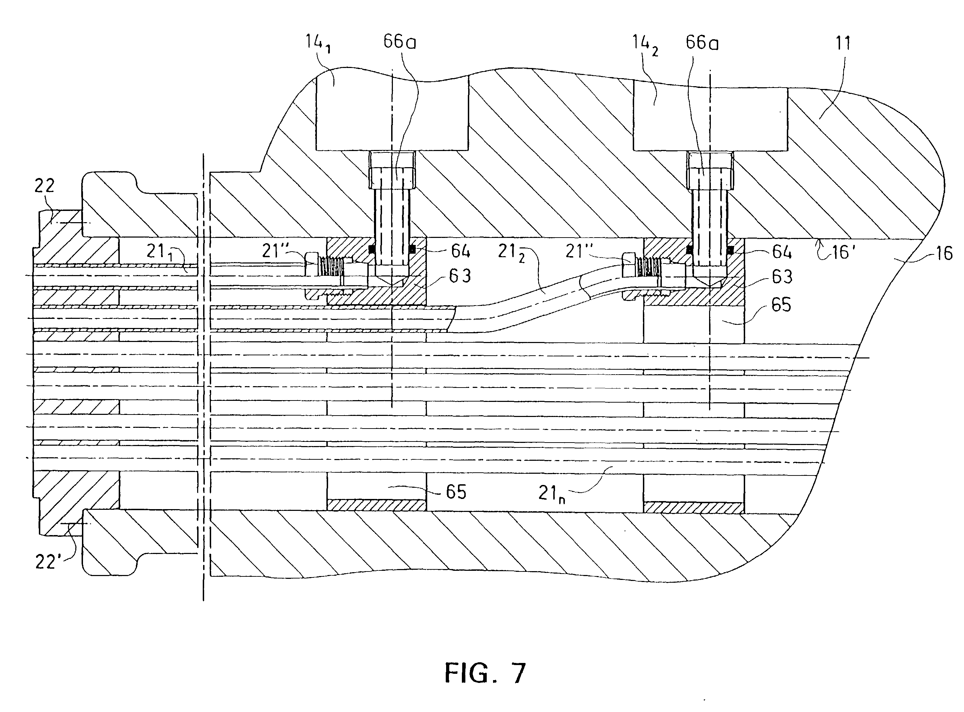

In Fig. 7, an embodiment of the invention is shown in which it is an essential feature that, in each particular case, the feed pipes 21₁...21ₙ are connected rigidly with the intermediate flanges operating as distributor pieces, which flanges are, in Fig. 7, denoted with the reference numeral 63, so that, in particular in the case of Fig. 7, in the joints between the feed pipes and the intermediate flanges 63, screw joints 21" are used. In Fig. 7, the opening in the annular intermediate flange is denoted with the reference numeral 65. On the other hand, it is a further essential feature of the embodiment of Fig. 7 that axial movement of the intermediate flanges 63 in the central hole 16 in the roll axle is also prevented. According to Fig. 7, this is accomplished so that, in the radial bore formed in the bottom of the cylinder bores 14₁,14₂, an intermediate pipe 66a is fitted, which, at the same time, locks the intermediate flange in its position. According to Fig. 7, the intermediate pipe 66a is additionally sealed against the intermediate flange 63 by means of a ring seal 64. The intermediate pipe 66a may be attached to the roll axle 11, for example, by means of a threaded joint. Thus, the embodiment as shown in Fig. 7 does not permit very large changes in length in the feed pipes 21₁...21ₙ.

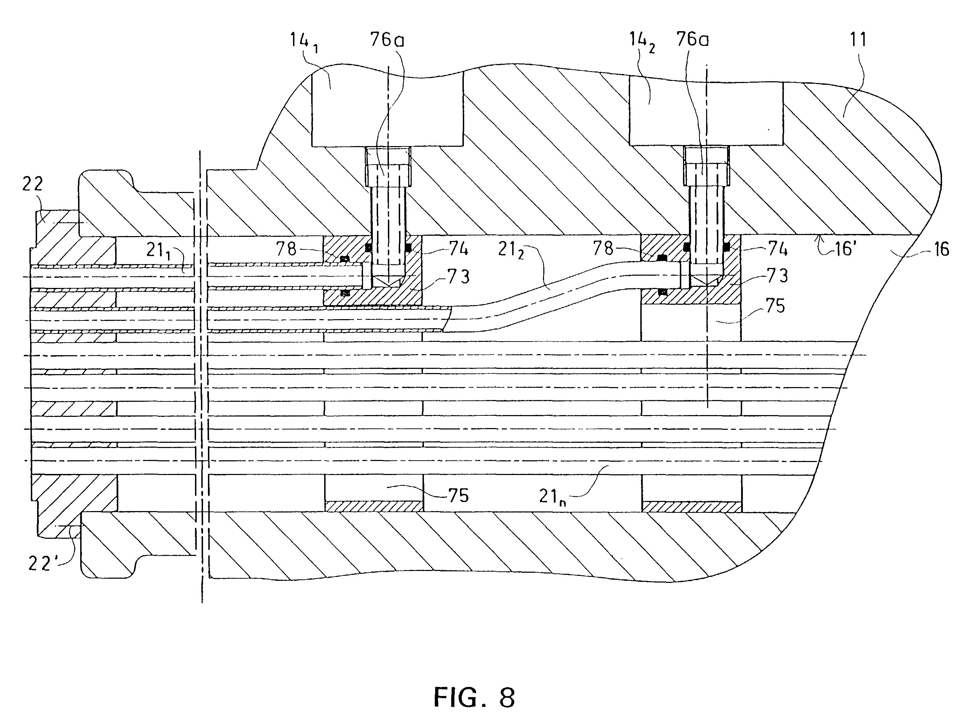

In the exemplifying embodiment of Fig. 8, the intermediate flanges are denoted with the reference numeral 73, and the openings passing through the intermediate flange with the reference numeral 75. The installation of the intermediate flanges 73 in their position in the central hole 16 in the roll axle 11 is similar to that described in relation to Fig. 7, so that axial movements of the intermediate flanges 73 are prevented. Thus, also in the exemplifying embodiment of Fig. 8, in the radial bore formed into the bottom of the cylinder bores 14₁,14₂, an intermediate pipe 76a has been installed, which locks the intermediate flanges 73 in their position at the same time. Further, the intermediate pipes 76a are sealed against the intermediate flanges by means of ring seals 74. Differing from the illustration of Fig. 7, in the exemplifying embodiment of Fig. 8 the changes in length arising from temperature are compensated for by means of the joint between the feed pipes 21₁...21ₙ and the intermediate flanges 73, which joint permits axial movement. In the exemplifying embodiment of Fig. 8, this has been accomplished so that, in each particular case, the joint between the feed pipe 21₁...21ₙ and the intermediate flange 73 is not rigid, but the feed pipe can move axially in relation to the intermediate flange 73. This is why the joints between the feed pipes 21₁...21ₙ and the intermediate flanges are sealed by means of O-ring seals 78.

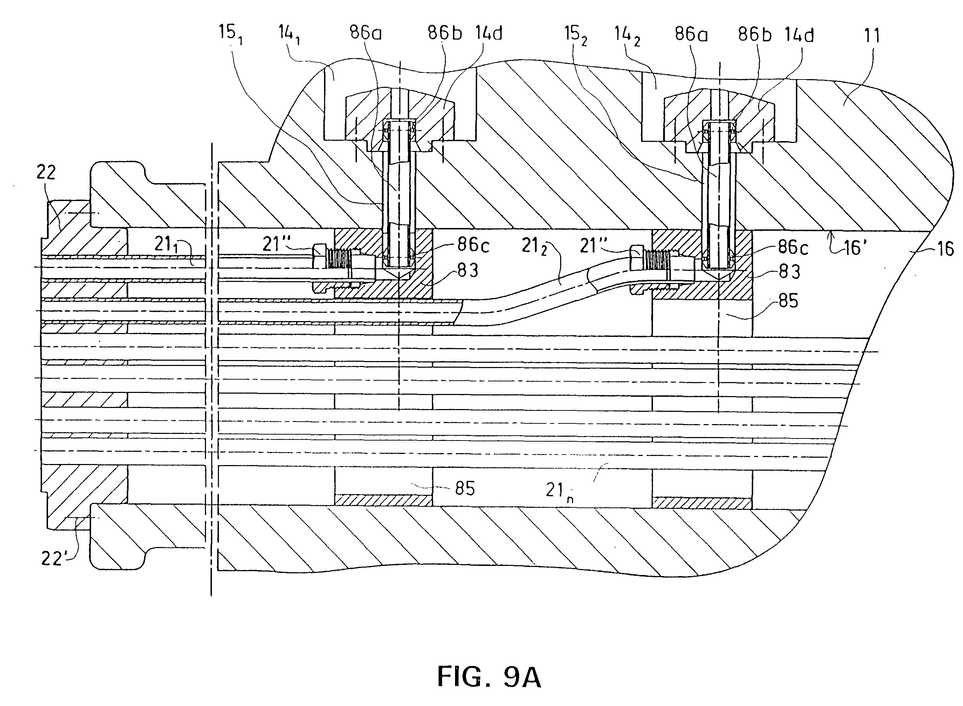

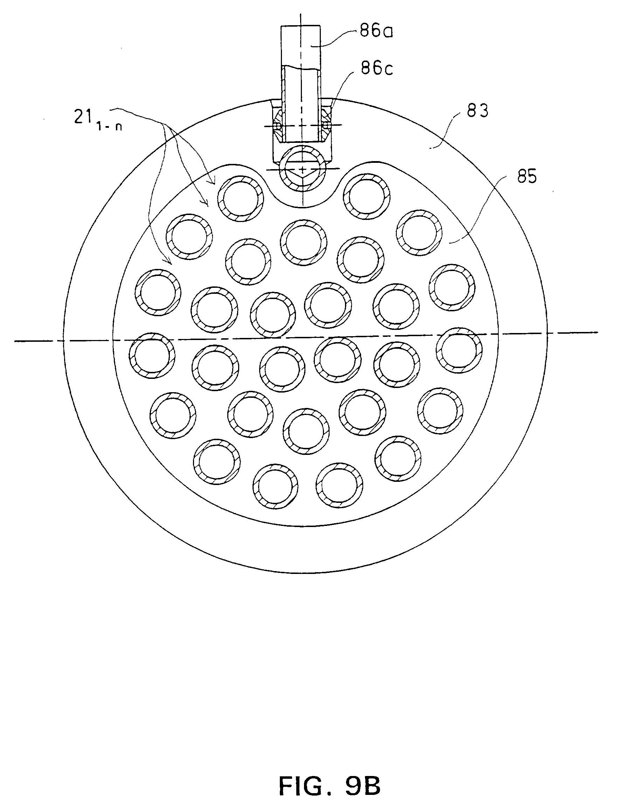

Figs. 9A and 9B show a further embodiment of the present invention so that the embodiment as shown in these figures is, in a way, a combination of the embodiments shown in Figs. 6A,6B and 7. The exemplifying embodiment that is being discussed now is similar to the embodiment of Figs. 6A and 6B in the respect that into the cylinder bores 14₁,14₂, on the radial bores 15₁,15₂, on the bottom of the cylinder bores 14₁,14₂, a support piece 14d has been installed, from which an intermediate pipe 86a is connected to the intermediate flange 83 fitted in the central hole 16 that has been formed into the roll axle 11. Further, in the present embodiment, it is a feature similar to Figs. 6A and 6B that both the intermediate flange 83 and the support piece 14d are provided with articulated joints 86b,86c, which are spherical joints in the embodiment of Figs. 9A and 9B. These spherical joints 86b and 86c permit that changes in length in the feed pipes 21₁...21ₙ, arising for example from temperature, can shift the intermediate flanges 83 axially in the central hole 16.

The embodiment now discussed is similar to Fig. 7 in the respect that the feed pipes 21₁...21ₙ are connected rigidly to the intermediate flanges 83, which operate as distributor pieces, so that screw joints 21" are used in the joints between the feed pipes and the intermediate flanges 83. In the other respects, the intermediate flange 83 is similar to that shown in Fig. 7 so that, in the intermediate flange 83, there is a large through opening 85, through which the other feed pipes are passed through the intermediate flange 83.

It is a feature common of all the embodiments that, in addition to the feed pipes 21_{1...n}, in the central hole 16 that has been formed into the roll axle 11, it is also possible to fit a return oil pipe or an equivalent duct as well as, in the case of a roll that is to be heated/cooled, a system of pipes for the heating/cooling fluid. Said pipes can be passed simply in the central hole through the openings in the intermediate flanges.

Above, the invention has been described by way of example with reference to the figures in the accompanying drawing. The invention is, however, not confined to the exemplifying embodiments illustrated in the figures alone, but these exemplifying embodiments can be modified in many ways and, for example, be combined with each other, so that different alternatives and embodiments of the invention may show variation within the scope of the inventive idea defined in the accompanying patent claims.

## Claims

1. A variable-crown roll (10) comprising a stationary roll axle (11) and a roll mantle (12) that is arranged revolvingly on said axle and that is supported on the roll axle (11) by means of hydraulic loading elements (13₁...13ₙ) which act upon the inner face (12') of the roll mantle in the radial direction and by means of which the axial profile of the roll mantle (12) can be regulated, wherein an axial through hole (16) is formed in the roll axle (11) and wherein substantially radial bores (15₁...15ₙ) or ducts (36a, 36'a, 46a, 56a, 66a, 76a,86a) are provided in the roll axle (11) and communicate with cylinder bores (14₁...14ₙ) of the hydraulic loading elements (13₁...13ₙ), said variable-crown roll (10) furthermore comprising a system (20) of oil feed ducts, which system (20) comprises the radial bores or ducts and oil feed pipes (21₁...21ₙ) extending from one of the roll (10) ends into the axial through hole (16), through which oil feed pipes (21₁...21ₙ) and radial bores (15₁...15ₙ) or ducts (36a, 36'a, 46a, 56a, 66a, 76a, 86a) a pressure fluid can be fed to the hydraulic loading elements (13₁...13ₙ),
**characterized in that**
said system (20) of oil feed ducts furthermore comprises intermediate flanges (23,33,43,53,63,73,83) which are arranged in the axial through hole (16) in the roll axle (11) at the axial locations of each loading element (13₁...13ₙ), wherein each of said intermediate flanges operates as a distributor piece and is connected with one of the loading elements (13₁...13ₙ) and with one of said oil feed pipes (21₁...21ₙ) so that the pressure fluid is passed to each of the loading elements (13₁...13ₙ) through the intermediate flange (23, 33, 43, 53, 63, 73, 83) associated therewith, whereby a pressure that can be regulated individually in the desired way can be passed to each of the loading elements (13₁...13ₙ) in the roll (10).

2. The roll as claimed in claim 1, **characterized in that** the intermediate flanges (23,33,43,53,63,73,83) are substantially annular intermediate flanges, which include an axially large through opening (25,35,45,55, 65,75,85) and to which that oil feed pipe (21₁...21ₙ) which passes the pressure fluid to the corresponding loading element (13₁...13ₙ) is connected while those oil feed pipes which pass the pressure fluid to the other loading elements pass through the through opening.

3. The roll as claimed in claim 1 or 2, **characterized in that** the outer circumferences of the intermediate flanges (23) are sealed against the wall (16') of the axial hole (16) in the roll axle (11) by means of two ring seals (24) placed at an axial distance from one another, a connection being opened between said ring seals from the intermediate flanges (23) radially through said radial bores (15₁...15ₙ) to the loading elements (13₁...13ₙ).

4. The roll as claimed in claim 1 or 2, **characterized in that** the intermediate flanges (33,43,53,63,73,83) are connected with the corresponding loading element (13₁...13ₙ) by means of one of said ducts, said one of said ducts being formed by an intermediate pipe (36a,36'a, 46a,56a,66a,76a,86a) that extends from the intermediate flange to the cylinder bore (14₁...14ₙ) of the loading element and that is sealed against said intermediate flange and said cylinder bore.

5. The roll as claimed in claim 4, **characterized in that** said intermediate pipe (36a,46a,56a,66a,76a,86a) is rigid.

6. The roll as claimed in claim 4, **characterized in that** said intermediate pipe (36'a) is resilient to permit axial movements of the intermediate flanges (33).

7. The roll as claimed in claim 4 or 5, **characterized in that** said intermediate pipe (46a,56a,86a) is connected to the intermediate flange (43,53,83) and to the loading element (13₁...13ₙ) by means of articulated joints (46b,46c;56b, 56c;86b,86c) so as to permit axial movements of the intermediate flange (43,53,83).

8. The roll as claimed in any of the preceding claims, **characterized in that** the oil feed pipes (21₁...21ₙ) are provided with a resilient member (21') so as to permit axial movements of the intermediate flanges (33).

9. The roll as claimed in any of the preceding claims, **characterized in that** the oil feed pipes (21₁...21ₙ) are connected to the intermediate flanges (73) so that they are sealed (78) and axially movable.

## Patentansprüche

1. Durchbiegungseinstellwalze (10) mit einer stationären Walzenachse (11) und einem Walzenmantel (12), der drehbar auf der Walzenachse angeordnet ist und der auf der Walzenachse (11) mittels hydraulischer Belastungselemente (13₁...13ₙ) abgestützt ist, die in radialer Richtung auf die Innenseite (12') des Walzenmantels wirken und mittels derer das Axialprofil des Walzenmantels (12) eingestellt werden kann, wobei ein axiales Durchgangsloch (16) in der Walzenachse (11) ausgebildet ist und wobei im wesentlichen radiale Bohrungen (15₁...15ₙ) oder Leitungen (36a, 36'a, 46a, 56a, 66a, 76a, 86a) in der Walzenachse (11) vorgesehen sind und in Verbindung mit Zylinderbohrungen (14₁...14ₙ) der hydraulischen Belastungselemente (13₁...13ₙ) stehen, wobei die Durchbiegungseinstellwalze (10) ferner versehen ist mit einem System (20) aus Ölzufuhrleitungen, welches System (20) aufweist die radialen Bohrungen oder Leitungen und Ölzufuhrrohre (21₁...21ₙ), die sich von einem der Enden der Walze (10) in das axiale Durchgangsloch (16) erstrecken, wobei durch die Ölzufuhrrohre (21₁...21ₙ) und die radialen Bohrungen (15₁...15ₙ) oder Leitungen (36a, 36'a, 46a, 56a, 66a, 76a, 86a) ein Druckfluid den hydraulischen Belastungselementen (13₁...13ₙ) zugeführt werden kann,
**dadurch gekennzeichnet, dass**
das System (20) aus Ölzufuhrleitungen ferner Zwischenflansche (23, 33, 43, 53, 63, 73, 83) aufweist, die im axialen Durchgangsloch (16) in der Walzenachse (11) an den axialen Orten eines jeden Belastungselementes (13₁...13ₙ) angeordnet sind, wobei jeder der Zwischenflansche als Verteilerstück arbeitet und mit einem der Belastungselemente (13₁...13ₙ) sowie mit einem der Ölzufuhrrohre (21₁...21ₙ) so verbunden ist, dass das Druckfluid jedem der Belastungselemente (13₁...13ₙ) durch den ihm zugeordneten Zwischenflansch (23, 33, 43, 53, 63, 73, 83) zugeführt wird, wodurch ein Druck, der individuell in gewünschter Weise eingestellt werden kann, jedem der Belastungselemente (13₁...13ₙ) in der Walze (10) zugeführt werden kann.

2. Die Walze nach Anspruch 1, **dadurch gekennzeichnet, dass** die Zwischenflansche (23, 33, 43, 53, 63, 73, 83) im wesentlichen ringförmige Zwischenflansche sind, die eine axiale große Durchgangsöffnung (25, 35, 45, 55, 65, 75, 85) aufweisen und mit denen dasjenige Ölzufuhrrohr (21₁...21ₙ) das das Druckfluid dem entsprechenden Belastungselement (13₁...13ₙ) zuführt, verbunden ist, während diejenigen Ölzufuhrrohre, die das Druckfluid den anderen Belastungselementen zuführen, durch die Durchgangsöffnung hindurch verlaufen.

3. Die Walze nach Anspruch 1 oder 2, **dadurch gekennzeichnet, dass** die Außenumfänge der Zwischenflansche (23) bezüglich der Wand (16') des axialen Lochs (16) in der Walzenachse (11) mit Hilfe von zwei Ringdichtungen (24) abgedichtet sind, die mit axialem Abstand voneinander angeordnet sind, wobei eine Verbindung offen ist zwischen den Ringdichtungen von den Zwischenflanschen (23) in Radialrichtung durch die radialen Bohrungen (15₁...15ₙ) zu den Belastungselementen (13₁...13ₙ).

4. Die Walze nach Anspruch 1 oder 2, **dadurch gekennzeichnet, dass** die Zwischenflansche (33, 43, 53, 63, 73, 83) mit dem entsprechenden Belastungselement (13₁...13ₙ) mittels einer der Leitungen verbunden sind, wobei diese eine der Leitungen gebildet ist durch ein Zwischenrohr (36a, 36'a, 46a, 56a, 66a, 76a, 86a), das vom Zwischenflansch zu der Zylinderbohrung (14₁...14ₙ) des Belastungselementes verläuft und das bezüglich des Zwischenflansches und der Zylinderbohrung abgedichtet ist.

5. Die Walze nach Anspruch 4, **dadurch gekennzeichnet, dass** das Zwischenrohr (36a, 46a, 56a, 66a, 76a, 86a) starr ist.

6. Die Walze nach Anspruch 4, **dadurch gekennzeichnet, dass** das Zwischenrohr (36'a) elastisch ist, um dadurch Axialbewegungen der Zwischenflansche (33) zu ermöglichen.

7. Die Walze nach Anspruch 4 oder 5, **dadurch gekennzeichnet, dass** das Zwischenrohr (46a, 56a, 86a) mit dem Zwischenflansch (43, 53, 83) und dem Belastungselement (13₁...13ₙ) verbunden ist mit Hilfe von Gelenkverbindungen (46b, 46c; 56b, 56c; 86b, 86c), um dadurch Axialbewegungen des Zwischenflansches (43, 53, 83) zu ermöglichen.

8. Die Walze nach einem der vorangehenden Ansprüche, **dadurch gekennzeichnet, dass** die Ölzufuhrrohre (21₁...21ₙ) mit einem elastischen Element (21') versehen sind, um dadurch Axialbewegungen der Zwischenflansche (33) zu ermöglichen.

9. Die Walze nach einem der vorangehenden Ansprüche, **dadurch gekennzeichnet, dass** die Ölzufuhrrohre (21₁...21ₙ) mit den Zwischenflanschen (73) so verbunden sind, dass sie abgedichtet (78) und axial bewegbar sind.

## Revendications

1. Cylindre (10) à bombé variable comprenant un essieu fixe (11) de cylindre et une enveloppe (12) de cylindre qui est disposée de manière à pouvoir tourner sur ledit essieu et est supportée par l'essieu (11) de cylindre à l'aide d'éléments hydrauliques de charge (13₁...13ₙ) qui agissent dans la direction radiale sur la face interne (12') de l'enveloppe de cylindre et à l'aide desquels le profil axial de l'enveloppe (12) de cylindre peut être ajusté, un trou axial traversant (16) étant formé dans l'enveloppe (11) de cylindre et des alésages (15₁...15ₙ) ou des conduits (36a, 36'a. 46a, 56a, 66a, 76a, 86a) sensiblement radiaux étant ménagés dans l'essieu (11) de cylindre et communiquant avec des alésages cylindriques(14₁...14ₙ) des éléments hydrauliques de charge (13₁...13ₙ), ledit cylindre (10) à bombé variable comprenant en outre un système (20) de conduits d'alimentation en huile, lequel système (20) comporte les alésages ou conduits et tuyaux radiaux (21₁...21ₙ) d'alimentation en huile s'étendant depuis l'un des extrémités du cylindre (10) jusque dans le trou traversant axial (16), un fluide sous pression pouvant être fourni aux éléments hydrauliques de charge (13₁...13ₙ) via lesdits tuyaux (21₁...21ₙ) et alésages (15₁...15ₙ) ou conduits (36a, 36'a, 46a, 56a, 66a, 76a, 86a) radiaux d'alimentation en huile.
**caractérisé en ce que**
ledit système (20) de conduits d'alimentation en huile comporte en outre des collerettes intermédiaires (23, 33, 43, 53, 63, 73, 83) qui sont disposées dans le trou traversant axial (16) de l'essieu (11) de cylindre aux emplacements axiaux de chaque élément de charge (13₁...13ₙ), chacune desdites collerettes intermédiaires servant de distributeur et étant reliée à l'un des éléments de charge (13₁...13ₙ) et à l'un desdits tuyaux (21₁...21ₙ) d'alimentation en huile de façon que le fluide sous pression soit transmis à chacun des éléments de charge (13₁...13ₙ) par l'intermédiaire de la collerette intermédiaire (23, 33, 43, 53, 63, 73, 83) correspondante, grâce à quoi une pression régulable individuellement de la manière voulue peut être transmise à chacun des éléments de charge (13₁...13ₙ) présents dans cylindre (10).

2. Cylindre selon la revendication 1, **caractérisé en ce que** les collerettes intermédiaires (23, 33, 43, 53, 63, 73, 83) sont des collerettes intermédiaires sensiblement annulaires, qui comportent une ouverture traversante (25, 35, 45, 55, 65, 75, 85) grande dans la direction axiale et auxquelles le tuyau (21₁...21ₙ) d'alimentation en huile qui transmet le fluide sous pression à l'élément de charge (13₁...13ₙ) correspondant est relié tandis que les tuyaux d'alimentation en huile qui transmettent le fluide sous pression à d'autres éléments de charge passent par l'ouverture traversante.

3. Cylindre selon la revendication 1 ou 2, **caractérisé en ce que** l'étanchéité du pourtour extérieur des collerettes intermédiaires (23) contre la paroi (16') du trou axiale (16) de l'essieu (11) de cylindre est assurée à l'aide de deux joints annulaires (24) placés à distance l'un de l'autre dans la direction axiale, une liaison radiale étant ouverte entre lesdits joints annulaires, des collerettes intermédiaires (23) aux éléments de charge (13₁...13ₙ), via lesdits alésages radiaux (15₁...15ₙ).

4. Cylindre selon la revendication 1 ou 2, **caractérisé en ce que** les collerettes intermédiaires (33, 43, 53, 63, 73, 83) sont reliées à l'élément de charge correspondant (13₁...13ₙ) à l'aide de l'un desdits conduits, ledit un desdits conduits étant formé par un tuyau intermédiaire (36a, 36'a, 46a, 56a, 66a, 76a, 86a) qui s'étend de la collerette intermédiaire à l'alésage cylindrique (14₁...14ₙ) de l'élément de charge et qui est rendu étanche contre ladite collerette intermédiaire et ledit alésage cylindrique.

5. Cylindre selon la revendication 4, **caractérisé en ce que** ledit tuyau intermédiaire (36a, 46a, 56a, 66a, 76a, 86a) est rigide.

6. Cylindre selon la revendication 4, **caractérisé en ce que** ledit tuyau intermédiaire (36'a) est élastique pour permettre des mouvements axiaux des collerettes intermédiaires (33).

7. Cylindre selon la revendication 4 ou 5, **caractérisé en ce que** ledit tuyau intermédiaire (46a, 56a, 86a) est relié à la collerette intermédiaire (43, 53, 83) et à l'élément de charge (12₁...13ₙ) à l'aide de joints articulés (46b, 46c ; 56b, 56c ; 86b, 86c) afin de permettre des mouvements axiaux de la collerette intermédiaire (43, 53, 83).

8. Cylindre selon l'une quelconque des revendications précédentes, **caractérisé en ce que** les tuyaux (21₁...21ₙ) sont munis d'un élément élastique (21') de façon à permettre des mouvements axiaux des collerettes intermédiaires (33).

9. Cylindre selon l'une quelconque des revendications précédentes, **caractérisé en ce que** les tuyaux (21₁...21ₙ) sont reliés aux collerettes intermédiaires (73) de façon à être rendus étanches (78) et à présenter une mobilité axiale.
